# EUROPEAN PATENT SPECIFICATION

(11) **EP 1 507 645 B1**
(45) Date of publication and mention of the grant of the patent: **19.07.2006**
(21) Application number: 03712402.1
(22) Date of filing: 24.03.2003
(51) Int. Cl.: B29C 67/00

(54) **A METHOD OF REGISTERING AND BONDING COATINGS TO FORM A PART, APPARATUS FOR MANUFACTURING A PART**
VERFAHREN ZUM AUSRICHTEN UND VERBINDEN VON BESCHICHTUNGEN ZUM FORMEN EINES FORMTEILS, VORRICHTUNG ZUR HERSTELLUNG EINES FORMTEILS
PROCEDE D ALIGNEMENT ET DE LIAISON DE REVETEMENTS POUR FORME R UNE PIECE, APPAREIL DE FABRICATION DE PIECES

(30) Priority: 13.05.2002 GB 0210778
(43) Date of publication of application: 23.02.2005
(73) Proprietor: 3D SYSTEMS, INC., Valencia, California 91355 (US)
(72) Inventor: Jonathan Hayes, Loughborough, LE11 1NL (GB)
(74) Representative: Hess, Peter K. G.
(86) International application number: PCT/GB2003/001247
(87) International publication number: WO 2003/095183

(56) References cited:
- US-A1- 2001 042 598

## Description

The invention relates to a method of manufacturing an item and an apparatus for manufacturing an item.

Known methods of manufacturing include injection moulding and die-casting. The manufacture of tooling for injection moulding or die-casting is a highly restrictive burden on industry, because of it's high cost and lead times. Similar things are true of the cost of tooling for punch pressing, while the time taken by processes such as photo-chemical machining, electro and electroless plating and the environmental issues that surround these processes limit their use. The cost and the time taken to post-assemble products substantially reduces the flexibility and competitiveness of manufacturing.

So-called "Solid Free Form manufacture"(SFF) systems have been used in Rapid Prototyping (RP) applications starting in 1988 with 3D Systems's introduction of their Stereolithography systems. The growth in the RP market has stimulated an accelerating rate of technological development in the field, and firms have developed different types of commercial systems for specific RP applications.

Solid Free Form (SFF) manufacture is essentially the computer-controlled additive manufacture of three-dimensional physical forms. All of the commercial SFF systems employ the same basic principle. CAD data of the desired component is sliced into a number of horizontal layers. Each of these layers is built in turn on top of the preceding layer, by the precise addition of material, until the object has been completed. SFF manufacture also encompasses the computer-controlled manufacture of objects comprised of a single layer plus any other additive method of manufacture.

All of the commercial systems use direct computer control of their additive manufacturing processes. Consequently, the main advantage that these systems have over machining and moulding processes is that they can produce a one-off object with complex geometry far more flexibly and quickly than machining and moulding can.

The main problem with all of these systems is that they cannot manufacture large batches of duplicate objects as fast as machining and moulding can. These systems have extremely limited capabilities for producing SFF objects with surface or internal colour, tone or doping. Furthermore, none of them can produce objects with parts made of entirely different materials.

Stereolithography RP systems work by using an UV laser to selectively expose the surface of liquid Ultra Violet (UV) reactive polymer to UV radiation (typically from a laser source). This causes the polymer to cure into a solid in the exposed area. The polymer that has been solidified is a physical realisation of a slice of a CAD model. The solidified material is supported on a platform. A new flat area of liquid UV reactive polymer is then laid over this layer by lowering of the platform into the liquid, and the exposure process is repeated to form another layer that bonds to the previous one. This process is repeated until the entire part has been completed.

Another UV polymer curing system is Cubital Ltd's Solid Ground Curing (SGC) RP system. Here a thin layer of UV reactive polymer resin is spread over a platform and then exposed to UV radiation shone through a patterned mask. The transparent areas of the mask correspond to the required cross sections of a CAD model, and the UV radiation that passes through these areas cures part of the polymer layer into the pattern of the required cross section. Ionographic technology is used to produce the masks that represent the required cross sections, and once a mask has been used it is erased and then re-imaged and inked with a new mask. A residual polymer cleaner removes the uncured polymer and then a spreader coats the cured polymer in wax. A cooling plate is used to accelerate the solidification of the wax, and once this has solidified it is milled flat by a milling head. The above processes are repeated until the entire model has been built. The wax is removed from the finished products by melting it away with hot (60°C) water.

By their nature, all of the commercial polymer-curing systems are limited to manufacturing objects out of UV reactive polymer. Consequently, the physical properties of these objects are not suitable for many functional applications.

Selective sintering systems have enabled objects to be made out of a wide range of powdered materials. As an example, one selective sintering method works by spreading a heat fusible powder on top of a movable platform that can be lowered within a cylinder that defines the maximum part volume. The layer of powder is then selectively fused by a laser that defines the layer of the CAD model. The platform is lowered and a new layer of powder is deposited and subsequently selectively fused to the preceding layer. This process is repeated until the object is completed.

By combining materials and coating the powders with various binders, it is possible to make specialised powders, tailored to particular functional applications.

Another rapid prototyping technique is "laminated object manufacture" (LOM) as disclosed in paragraph 13 of US-A-2001/0042598 and the preamble of claims 1 and 11 of this application. In this technique objects are built by sticking sheets of material together. An uncut sheet is laid down and a heated roller is passed over it, which causes a coating of heat sensitive glue on the sheet to adhere it to the underlying sheet. A laser is then used to cut the sheet to the desired shape. Another layer is then added to the stack and the process is repeated. Most of the LOM RP systems are limited to manufacturing objects out of paper and polymers. Consequently, the physical properties of these objects are not suitable for many functional applications.

The "Fused Deposit Modelling" (FDM) process uses low diameter thermo polymer wire-like filaments, which are extruded in a hot semi-molten form from a delivery head. The motion of the delivery head is computer-controlled. This allows the filament to be extruded in a pattern that produces a layer of the required object and the object is built up in a layer-wise fashion out of the extruded layers that bond together when they cool. The cost of converting the thermo polymer to a filament can be extremely high and so objects that contain a large volume of the extruded filament can be extremely costly in comparison to injection moulded objects.

The use of hot melt thermal jet printing, bubble jet printing, and drop on demand jet printing technology in rapid prototyping is quite a new-development. The principle is relatively straightforward. Solid ink is loaded into an ink reservoir and then heated so that the molten ink runs off and is channelled into a piezo-electric jet printer head.

The printer then ejects the ink in molten droplet form onto a substrate upon which the droplets cool and thus solidify and adhere. Some systems, such as Sanders Prototyping's Model Maker II use continuous-flow jet printers; others such as 3D Systems Actua 2100 use drop-on-demand (DOD) impulse jet printers. At present, these systems are limited to manufacturing objects out of waxes and thermo polymers. Consequently, the physical properties of these objects are not suitable for many functional applications.

MIT's 3DP system, Soligen Inc's DSPC and Extrude Hone Corp.'s Prometal licensed versions use a different method from the previously mentioned selective sintering, but objects are still built by putting down a layer of powder. The difference is that the powder layers are bound together using a jet printer to deposit a binder or solvent selectively onto the powder. The process is repeated until the required three dimensional object is constructed. Finally the object is removed from the loose powder and any unbound powder left on the object or trapped in inclusions is cleaned away.

Topographic Shell Fabrication (TSF) is a proprietary RP technology developed by Formus, USA. The TSF system is designed for manufacturing ultra large objects that can be the size of cars or even larger. The TSF system comprise a chamber, a layering device that deposits consecutive horizontal layers of silica powder into the chamber and a nozzle that selectively infiltrates a paraffin wax binder into the powder.

Objectives of the invention are as follows:
- The production of SFF objects out of a broad range of medical, pharmaceutical, engineering and/or electronic materials.
- A cost-effective SFF alternative to processes such as injection moulding, die casting, photo-chemical machining, electroless forming, electro forming, machining, rotational moulding, dust pressing and slip casting.
- An SFF system capable of competing with mass-production rates of processes such as injection moulding, die casting, photo-chemical machining, electroless forming, electro forming or punch pressing.
- The direct SFF manufacture of objects with a number of components, each made of different materials and/or more than one surface colour. This reduces or eliminates the post-assembly requirements currently associated with the manufacture of such objects.
- An SFF system that is more environmentally friendly than processes such as injection moulding, die-casting, photo-chemical machining, electroless forming, electro forming or punch pressing.
- The provision of, and if required, the subsequent removal of physical support for overhangs, large spans and disjointed volumes involved in an SFF object.

According to the invention there is provided a method of manufacturing an item using the following steps:
- Placing coatings into a jogger that is similar to or the same as the paper joggers used in the printing industry.
- Registering the coatings with the jogger.
- Consecutively bonding each coating as it is registered, or bonding a stack of registered coatings so that a bonded stack is formed.
- If necessary removing temporary sections of the stack so that a finished part is released from the stack.

In this way, items can be manufactured rapidly, using equipment that is readily available and inexpensive.

A specific embodiment of the invention will now be described by way of example with reference to the accompanying drawings in which:
- Figure 1:: Shows parallel stack and registration with the aid of a paper jogger and clamping mechanism.
- Figure 2:: Shows an arrangement for performing the abrasive height adjustment of coatings that uses shims.
- Figure 3:: Shows an arrangement for performing the abrasive height adjustment of coatings that uses micrometers.
- Figure 4:: Shows bonding of multiple coatings in a stack which involves peeling non-stick sheets away from coatings that have glue or a high solvent content on their surfaces.
- Figure 5:: Shows bonding of multiple coatings involving the pulling out of sheets that have a solvent or glue dispenser or a heating element at their ends which emits material or energy, causing the bonding.
- Figure 6:: Shows bonding of multiple coatings that involves peeling off sheets from coatings that contain a high proportion of solvent or glue.
- Figure 7:: Shows a selective and variable bonding arrangement.

Coatings that are cross sectional slices of the required part may be manufactured by the following means:
- Pick and place component assembling;
- Embroidering or sewing;
- Printing that uses systems based on electrophotography, toner jet printing, magnetography, ionography, thermal transfer, thermal jet printing, bubble jet printing, drop on demand jet printing, hot melt or phase change thermal jet printing, elcography, continuous flow jet printing, lithographic printing; screen printing, flexography, gravure printing, metal press printing, hot foil stamping, thermography or tampography technology;
- Laser cutting, die cutting, stamping, punch pressing, computer navigated knife cutting or label cutting;
- Electroforming, etching, machining, selective UV or Thermal curing;

Combinations of these may also be used, and other manufacturing methods may also be used to make the coatings that are cross sectional slices of the required part.

It is preferable that a manufacturing means be controlled by a computer, so that it forms a coating with the geometry which allows it to be used as a cross sectional slice of the required part. The data used by the computer to control the geometry may be derived from a CAD model or slicing programme.

If any of these manufacturing means produces temporary material that may contaminate the coatings, it may be removed before the coatings are registering and bonded, by peeling, cutting, abrading, washing or dissolving.

The coatings are placed in a jogger and the jogger is vibrated to give them the appropriate registration. If necessary the coatings may be collated before they are placed in the jogger.

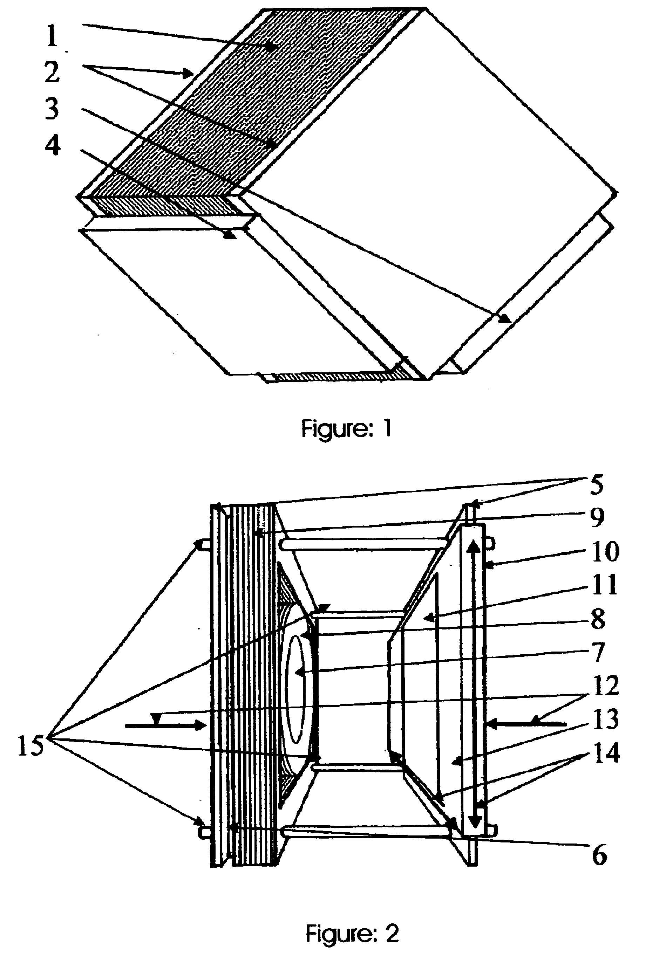

Figure 1 shows how coatings (1) may be registered in parallel in a paper jogger and clamping mechanism (2). This necessitates coatings (1) being formed with right angles or some other edge feature that is the male or female counterpart to a feature made by the jogger's base (3 and 4) (see Figure 1). This allows them to be placed in the jogger and vibrated, so that they settle in register onto the jogger's feature. A clamp (2) is then used to force the coatings (1) together and to hold them in a registered stack (see Figure 1).

The coatings in the stack are then bonded to form the part.

Alternatively, coatings may be consecutively placed in the jogger, registered and then bonded, so that a stack is gradually built up.

If the parts being manufactured do not fit into the jogger, they would need to be assembled from multiple stacks, which would have to be joined together. This might be a very fast and efficient way of constructing large parts, because the stacks could be registered and bonded in parallel, with a number of joggers.

A jogger may also be used to consecutively register each of a part's coatings, and as each coating is registered it may be bonded to a plate that is also in register within the jogger, or it may be bonded to previously bonded coating so that the part is built. If necessary, multiple parts may be built on different plates within the jogger, so that parts are made in parallel, and new coatings may be collated with the plates that have coatings on them, so that stacks are built by the addition of coatings.

If the manufacturing means produces temporary material, such as sheet material on which the coatings are manufactured, it may be removed after a coating has been bonded, by peeling, cutting, abrading, washing or dissolving the material off the coating.

If it is necessary to produce a highly accurate part then a subtractive coating adjustment process may be used to maintain or ensure the accuracy of the part as it is built. This may involve planing, cutting, abrading, ablating or machining material off a bonded coating prior to the bonding of the next coating, so that the bonded coatings have the required x, y and z Cartesian dimensions and position to form a part.

Shims, micrometers or a motion control device may be used to ensure that the adjustment is performed in a way that causes each coating to have the appropriate level and parallel relationship to the other coatings. This may be performed in parallel for a number of coatings being built on a number of plates, and these may be held in a jogger.

If the height adjustment needed is very small and the majority of the adjustment involves removing any irregularities on the surfaces of the coatings or between the coatings, abrasion is the only subtractive option to achieve this. Figure 2 shows an arrangement for performing the abrasive adjustment, which involves collating plates (5) and sheets (6) with a coating or coatings (7 and 8) attached, shims (9) that restrict the height of abrasion and a support (10) that holds an abrasive (11), to form a stack. The compression (12) of the stack presses the side of the support (10) containing the abrasive (11) onto the surface of the coatings (7 and 8). The compression (12) brings the surface of the support (9) without the abrasive (13) into contact with the shims (9). This restricts the level of the subsequent abrasion. The plates (5) ensure that the pressure (12) is evenly distributed across the stack, and the support (10) with abrasive (11) on it is then vibrated (14). This causes abrasion of the surface of the coating or coatings (7 and 8) down to the height that the restriction allows. It is preferable, though not crucial, that the plates (5) sheets (6) and shims (9) be held together by pins or bars (15) during the vibration. This might be achieved by sliding the pins or bars (15) through holes in these materials.

Other methods might also be used. Numbers of these arrangements may be collated and stacked together, so that a number of coating heights can be adjusted in parallel. The collation and adjustment process might also be repeated using different grades of abrasive (11), allowing the surfaces of the coatings to be polished and made mirrorlike. Depending on the geometry of a part, coatings made of support material (7) might be required, to prevent the part coatings (8) from being distorted during processing.

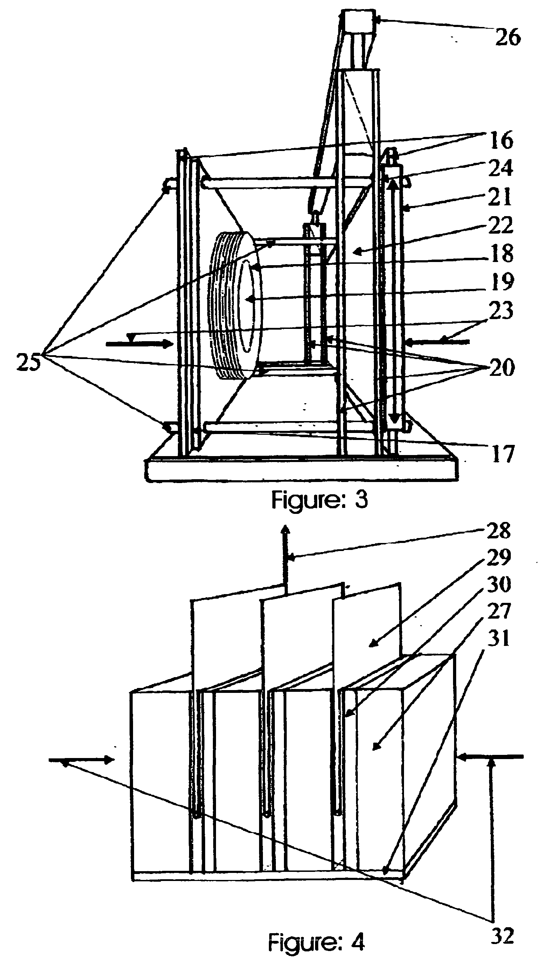

Figure 3 shows how micrometers or a motion control device may be used to ensure that the adjustment is performed in a way that causes each coating to have the appropriate level and parallel relationship to the other coatings. This involves collating plates (16) sheets (17) coating or coatings (18 and 19) attached, stops (20) that restrict the height of subtraction and a support (21) that holds a subtractive device (22), to form a pack. The compression (23) of the pack presses the side of the support (21) containing the subtractive device (22) onto the surface of the coatings (18 and 19). The compression (23) brings the surface of the support (24) without the subtractive device into contact with the stops (20). This restricts the level of the subsequent subtraction. The plates (16) ensure that the pressure (23) is evenly distributed across the stack, and the support (21) with the subtractive device (22) then levels the coating to the level that the stops (20) allow. It is preferable, though not crucial, that the plates (16) and sheets (17) be held together by pins or bars (25) during the vibration. This might be achieved by sliding the pins or bars (25) through holes in these materials. A micrometer or motion control device (26) may alter the level of the stops so that subsequent adjustment may be performed for other coatings. A number of these arrangements may be used at the same time, and the micrometer or motion control device may be used to alter the stops in all of the arrangements.

Depending on the coating materials used, bonding may be brought about by solvent vapour gradually softening the coatings so that they stick together.

Depending on the coating materials used, bonding may be achieved by evaporating solvent that has been applied to a coating or infiltrated into a stack.

Bonding of water-soluble coatings may involve the use of water.

Bonding of polyester coatings may involve the use of hexafluoro-2-isopropanol, acetophenone, pyridine, quinoline, tetralin, xylene, 1,2-dichloroethane or 1-methylnaphalene.

Bonding of nylon coatings may involve the use of aniline, benzyl alcohol, cyclohexanol, dibasic ester, ethylene glycol 2 ethylhexyl ether, 1-octanol or 1-methylnaphalene.

Bonding of ABS coatings may involve the use of ammonium hydroxide, aromatics such benzene, toluene or xylene, chlorinated aromatics, chlorinated aliphatics, amines, ketones or hot alcohols.

Bonding of polyvinyl butyral coatings may involve aniline, benzyl alcohol, cyclohexanol morpholine or propylene glycol phenyl ether.

Bonding of polyurethane coatings may involve the use of acetic acid, acetone, amyl acetate, aniline, anisole (methyoxybenzene), benzyl alcohol, butylene glycol ethyl ether, butylene glycol n-butyl ether, diacetone alcohol, diasic ester, diethylene glycol butyl ether, diglyme, n-propylamine or 1,2-cyclohexane carbonate.

Bonding of polyethylene coatings may involve the use of hydrocarbons, halogenated hydrocarbons or hot toluene, xylene, amyl acetate, trichlorethylene, petroleum ether, paraffin, turpentine, aniline, anisole, cyclhexylamine, dibasic ester, diethyl carbonate, methylene chloride, quinoline, 1,1,2,2-tetrachlorethane or 1,4-diaxane.

Bonding of polystyrene coatings may involve the use of methylene chloride, MEK, benzene, toluene, ethyl benzene, chloroform, carbon disulfide, carbon tetrachloride, esters, ketones, ansole (methoxybenzene) or cyclohexanone.

Bonding of melimine coatings may involve the use of aniline or benzyl alcohol.

Bonding of PVC coatings may involve the use of actone, acetophenone, aniline, ansole or ethylene glycol butyl ether acetate.

Bonding of polypropylene coatings may involve the use of benzene, carbon tetrachloride or decalin mesitylene.

Bonding of coatings composed of or containing bisphenol A epichlorohydrin, bisophenol A epoxy, bisphenol epoxy ester or bisphenol A trimellitic epoxy ester may involve the use of acetic acid, acetone, cylophexylamine, dibasic ester, diethylamine or diethylketone.

Bonding of phenolic resin coatings may involve the use of allyl alcohol, benzyl alcohol, cyclohexane, diethylenetriamine, ethylene glycol diacetate, furfuryl alcohol, 1,2-dimethyl imidazole or 2-pryrrolidinone.

If a coating is made of acrylic, and dependent on the particular acrylic used, bonding may involve the use of pyridine, quinoline, tetrahydrofurfuryl alcohol, amyl acetate, ansole (methoxybenzene), butylene glycol ethyl ether, butylenes glycol methyl ether, acetophine, aniline, chloroform, cumene (isopropylbenzene), diethyle phthalate, acetic acid, allyl alcohol, butylene glycol n-propyl ether, hexanol (2-methyl-1-pentanol), propylene glycol isopropyl ether, cyclohexylamine, tetralin, xylene, acetophenone, o-xylene, tetralin, mineral spirits, acetophenone, acetone, methylene chloride or halogenated hydrocarbon.

Alternatively, glues may be infiltrated into a stack or applied to a coating and then allowed to set, so that a coating or stack is bonded.

If coatings are consecutively placed in the jogger, registered and then bonded so that a stack is gradually built up, then ultrasonic, hot plate, laser or electron beam welding or other welding techniques may also be used to achieve the bonding.

Figure 4 shows an arrangement for the bonding of multiple coatings (27) in parallel in a stack. This involves peeling away (28) non-stick sheets (29) from coatings (27) with glue or a high solvent content on their surfaces (30). It is preferable for the coatings to be fixed (31) to a base during this procedure, to prevent them from being disturbed. The swelling of the coatings (27) as they absorb the solvent, and/or the clamping force (32) reduces the gap between the coatings (27) so that they come into contact (see Figure 4). Then the drying or setting of solvent or glue respectively bonds them together. If necessary, the opposite coating surfaces to those covered by the non-stick sheets (29) in Figure 4 can also be covered with non-stick sheets (29). These surfaces may also be covered with glue or have a high solvent content, or they may be self-adhering, so that when the sheets are peeled off they aid in the bonding of the stack's coatings (27). The surfaces (30) may also be printed, so that they contain different sections of solvent or glue, suitable for causing the binding of different sections of coatings, composed of different materials.

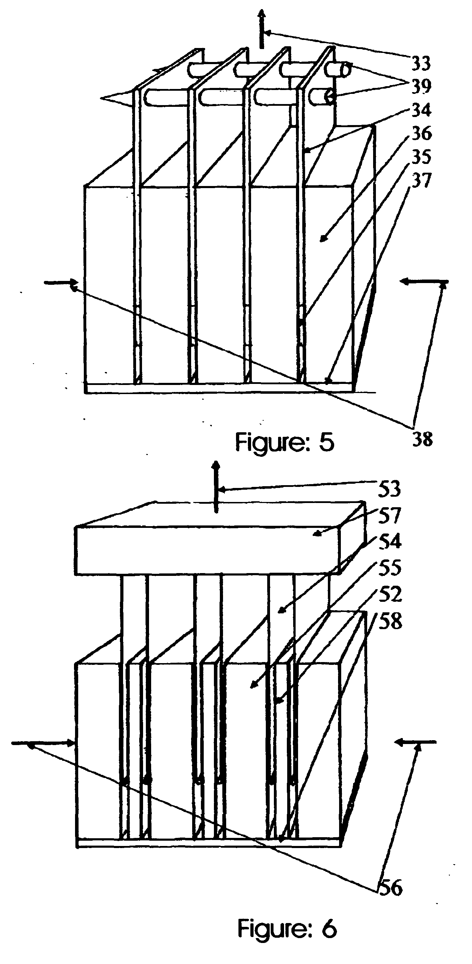

Figure 5 shows an arrangement that involves pulling out (33) sheets (34) that have solvent or glue dispensers, or heating elements, or friction welding devices on their ends (35) from a stack of coatings (36). This results in solvent, glue or energy being deposited on the surfaces of the coatings (36) in the stack. It is preferable that during this procedure the coatings (36) are bonded (37) to a base, to prevent them from being disturbed. The subsequent expansion of the coatings (36), as they absorb the solvent or energy, and/or the clamping force (38), reduces the gap between the coatings so that they come into contact. Then drying, setting or cooling causes the coatings to bond firmly together. Figure 5 also demonstrates that pins (39) could be slid through the sheets (34), so that it would be easier to pull them out of the stack in parallel. The holes for the pins (39) could be pre-formed, or made by puncturing them with the pins (39). The pins (39) could be used with any of the bonding arrangements described. The friction welding could be achieved by vibrating the sheets (34) as they are pulled out (33).

Figure 6 is an arrangement for bonding multiple coatings (52) in a stack. It involves peeling off (53) non-stick sheets (54) from coatings that contain a high proportion of solvent or glue (55). Compression (56) is then used to bring the coatings (52 and 55) into contact, so that they bond. The advantage of this arrangement over that of Figure 5 is that glue or solvent containing coating (55), laminated between the two sheets (54), could be manufactured in parallel with the coatings (52). The laminated coating (55) might also be printed, so as to contain different sections of solvent or glue, capable of causing the bonding of different sections of the coatings (52). Alternatively, the laminated coating (55) could contain one type of solvent or glue, as long as it was capable of causing the bonding. Figure 6's arrangement indicates that the sheets (54) could be attached to a slab (55, 57), making it easier to pull them out in parallel. The attachment could involve the use of magnets or glue, and it could be used with any of the bonding arrangements described. It would also be preferable for the coatings (52 and 55) to be held onto a base (58), to prevent them from being disturbed during the peeling off (53).

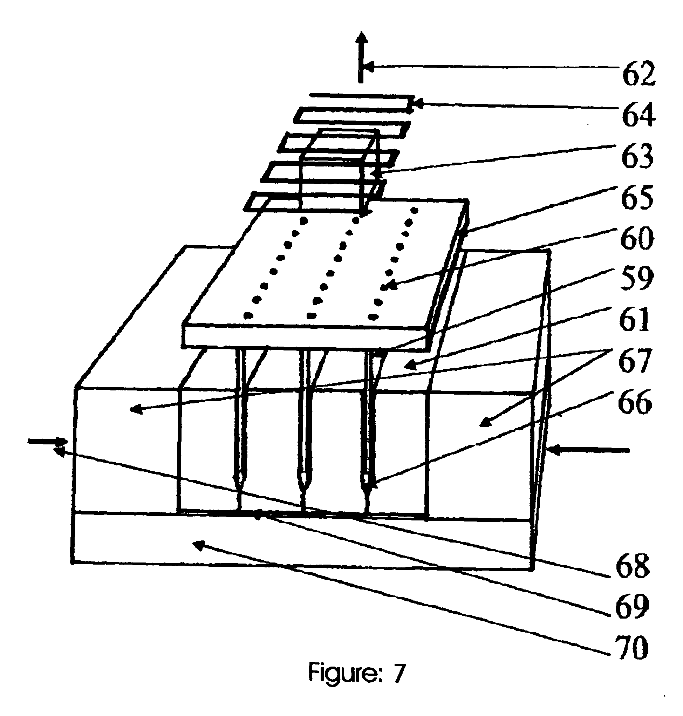

Figure 7 shows a variable bonding arrangement for multiple coatings, each composed of sections made of different materials. The sheets (59) contain channels (60) for guiding the energy for bonding the coatings (61) into the stack of coatings (61). As they are pulled out (62) of the stack, an energy source connector (63) traverses (64) across the slab (65) through which the channels (60) pass. This allows energy to be conveyed selectively down the channels (60) and into the surfaces of the coatings (61), so that a part is formed out of bonded coatings (61). The level of energy delivered to the channels (60) may be controlled, so that it is sufficient to bond each segment of a part appropriately. This allows this arrangement to be used to bond a part composed of segments made of different materials. As long as there isenough power, the connector (63) could connect to all of the channels (60) at once, making the process continuous and avoiding the need for traversing (64) and pulling out (62) of the sheets (59).

Alternatively, there could be an array of connectors (63), traversed linearly across the channels (60), with one or more connectors (63) traversed in a similar way to the incremental motion control used in desktop jet printers. A device similar to a plotter could also be used as a vector traverse (64) with a connector (63) across the channels (60).

With all of the examples, except that involving continuous pull out (62), the pull out (62) might need to be paused consecutively, to allow a traverse (64) to be started and stopped consecutively. This would allow a part to be bonded at each of the heights at which the ends of the channels pause. The energy supplied to the channels (63) could be in the form of electricity, heat, vibration or light. In these instances, the ends of the channels might be resistance heating elements, heat conductors, vibration conductors, optical fibres or guides respectively. Depending on the coating materials used, the bonding could be achieved by welding or curing the coatings (66). During the bonding, it is preferable for a clamp (67) be used to supply compressive force (68), to close the gaps between the coatings (61). It is desirable, though not essential, that the coatings be bonded (69) to a base (70) so that they are not disturbed by the pull out (62).

Removing involves releasing a part from the unwanted sections of a stack. If the sections are appropriately soluble the releasing may involve dissolving them. Alternatively, manual means, shot blasting, catalysed or thermal degradation may be used to release a part. The type of material that the sections are made of determines the type of material that may be used to dissolve or catalyse it as follows:
- Water-soluble sections may be dissolved with water.
- Polyester may be dissolved with hexafluoro-2-isopropanol, acetophenone, pyridine, quinoline, tetralin, xylene, 1,2-dichloroethane or 1-methylnaphalene.
- Nylon coatings may be dissolved with aniline, benzyl alcohol, cyclohexanol, dibasic ester, ethylene glycol 2 ethylhexyl ether, 1-octanol or 1-methylnaphalene.
- Polyvinyl butyral sections may be dissolved with aniline, benzyl alcohol, cyclohexanol morpholine or propylene glycol phenyl ether.
- Polyurethane sections may be dissolved with acetic acid, acetone, amyl acetate, aniline, anisole (methyoxybenzene), benzyl alcohol, butylene glycol ethyl ether, butylene glycol n-butyl ether, diacetone alcohol, diasic ester, diethylene glycol butyl ether, diglyme, n-propylamine or 1,2-cyclohexane carbonate.
- Polyethylene sections may be dissolved with hydrocarbons, halogenated hydrocarbons or hot toluene, xylene, amyl acetate, trichlorethylene, petroleum ether, paraffin, turpentine, aniline, anisole, cyclhexylamine, dibasic ester, diethyl carbonate, methylene chloride, quinoline, 1,1,2,2-tetrachlorethane or 1,4-diaxane.
- Polystyrene sections may be dissolved with methylene chloride, MEK, benzene, toluene, ethyl benzene, chloroform, carbon disulfide, carbon tetrachloride, esters, ketones, ansole (methoxybenzene) or cyclohexanone.
- Melimine sections may be dissolved with aniline or benzyl alcohol.
- PVC sections may be dissolved with actone, acetophenone, aniline, ansole or ethylene glycol butyl ether acetate.
- Polypropylene sections may be dissolved with benzene, carbon tetrachloride or decalin mesitylene.
- Sections composed of or containing bisphenol A epichlorohydrin, bisophenol A epoxy, bisphenol epoxy ester or bisphenol A trimellitic epoxy ester sections may be dissolved with acetic acid, acetone, cylophexylamine, dibasic ester, diethylamine or diethylketone.
- Phenolic resin sections may be dissolved with allyl alcohol, benzyl alcohol, cyclohexane, diethylenetriamine, ethylene glycol diacetate, furfuryl alcohol, 1,2-dimethyl imidazole or 2-pryrrolidinone.
- If the sections are made of acrylic, and dependent on the particular acrylic used, theymay be dissolved with pyridine, quinoline, tetrahydrofurfuryl alcohol, amyl acetate, ansole (methoxybenzene), butylene glycol ethyl ether, butylenes glycol methyl ether, acetophine, aniline, chloroform, cumene (isopropylbenzene), diethyle phthalate, acetic acid, allyl alcohol, butylene glycol n-propyl ether, hexanol (2-methyl-1-pentanol), propylene glycol isopropyl ether, cyclohexylamine, tetralin, xylene, acetophenone, o-xylene, tetralin, mineral spirits, acetophenone, acetone, methylene chloride or halogenated hydrocarbon.
- Cellulose sections may be catalysed with cellulase.
- Starch sections may be catalysed with amylase.
- Hydrogen peroxide sections may be catalysed with catalase.

The sections may be made of any of the materials that the manufacturing means uses to make them. Consequently, a section may be made of polyester, nylon, polyvinyl butyral, polyurethane, polystyrene, melimine, PVC, polypropylene, bisphenol A epichlorohydrin, bisophenol A epoxy, bisphenol epoxy ester or bisphenol A trimellitic epoxy ester, Phenolic resin, acrylic, ABS, cellulose, polycarbonate, polyvinyl alcohol, poly(2-ethyl-2-oxazoline), polyethylene glycol, polyethylene oxide, wax, starch, sugar, magnesium oxide, magnesium hydoxide, calcium oxide, calcium hydroxide, sodium oxide, sodium hydroxide, sodium chloride, alumina, zirconium silicate, molochite, talc, carbon, gum Arabic, salt, carboxy methyl cellulose, alginate, Agar, zanthum gum, albumin or it may be made of a plurality of the previously mentioned materials.

The parts may be made of any of the materials that the manufacturing means uses to make the coatings. Consequently, a part may be made of polyester, nylon, polyvinyl butyral, polyurethane, polystyrene, melimine, PVC, polypropylene, bisphenol A epichlorohydrin, bisophenol A epoxy, bisphenol epoxy ester or bisphenol A trimellitic epoxy ester, Phenolic resin, acrylic, ABS, cellulose, polycarbonate, polyvinyl alcohol, poly(2-ethyl-2-oxazoline), polyethylene glycol, wax, zinc, aluminium, stainless steel, steel, titanium, vanadium, tantilum, nickel, copper, bronze, brass, indium, tin, gold, silver, solder, magnesium, tungsten, tungsten carbide, silica, alumina, molochite zirconium silicate or carbon, or combinations of the previously mentioned materials or other materials.

## Claims

1. A method of manufacturing a part involving steps of:
a) using data derived from a slicing program to control a manufacturing means that makes coatings (1) that are cross sectional slices of a required part having right angles and **characterized by** another edge feature, the part being a male or female counterpart to a feature made by a base (3, 4); and,
b) placing the coatings in the base (3, 4) and vibrating them, so that they settle in register onto the base's feature.

2. The method according to claim 1 wherein the method further comprises consecutively bonding each coating as it is registered so that a stack of bonded coatings is gradually built up.

3. The method according to claim 1 further comprising bonding a stack of registered coatings in parallel so that a bonded stack is formed.

4. The method according to claim 2 further comprising bonding each of the coatings preferably by using a clam (2) to force the coatings together, as they are registered on the base to a plate that is also in register with the base.

5. The method according to claim 2 comprising removing sheet material from the coating after a coating has been bonded.

6. The method according to claim 4 further comprising using a subtractive coating adjustment process to maintain the accuracy of the part as it is built.

7. The method according to claim 6 further comprising performing the adjustment in parallel for a plurality of coatings built on corresponding plurality of plates that are held in a base.

8. The method according to claim 7 further comprising collating the plates prior to placement in the base.

9. The method according to claim 8 further comprising collating prior to placing the coatings on the base the coatings with sheets containing channels for guiding energy into a stack of coatings prior to the coatings and sheets being placed on the base and registered.

10. The method according to claim 9 further comprising removing temporary sections of the stack preferably by dissolving or catalyzing them away from the part, so that a finished part is released from the stack.

11. An apparatus for manufacturing a part comprising in combination:
a) slicing program means arranged to control a manufacturing means the manufacturing means making coatings (1) that are the cross sectional slices of the part **characterized by** the part containing registering means in the form of an edge feature that is the male or female counterpart to registering means on a base (3, 4); and,
b) coating means for placing the coatings (1) on the base, and
c) vibration means (14) for vibrating the coating placed on the base; so that the coatings settle in register onto the registering means on the base.

12. The apparatus according to claim 11 further comprising the coating means being adapted to consecutively place the coatings on the base; and
bonding means for bonding the coatings arranged to bond each coating as it is registered so that a stack of bonded coatings is gradually built up.

13. The apparatus according to claim 11 further comprising the bonding means being arranged to bond a stack of registered coatings so that the coatings are bonded in parallel.

14. The apparatus according to claim 13 further comprising the bonding means preferably means for clamping to force the coatings together, being adapted to bond the coatings to a plate means that is adapted to allow multiple parts to be built up on different plates the and the means for placing further being adapted to place plates on the base, the base registering the plates and coatings.

15. The apparatus according to claim 11 further comprising means for removing temporary sheet material on which the coatings are manufactured after a coating has been bonded.

16. The apparatus according to claim 15 further comprising means for ensuring the accuracy of a part as it is being built, the means for ensuring accuracy employing a subtractive process.

17. The apparatus according to claim 16 further comprising the adjustment means causes the coatings to have a level parallel relationship for a plurality of coatings being built on a number of plates that are held on the base.

18. The apparatus according to claim 17 wherein the coatings and plates placed on the base are collated by collating means prior to being placed on the base.

19. The apparatus according to claim 18 further comprising the coating means inserting channels having heating elements, heat conductors, or optical fibers, to guide energy into a stack of coatings to force the coatings together so that the coatings can be bonded together.

20. The apparatus according to claim 21 further comprising:
a) means for removing temporary sections of the stack so that a finished part is released from the stack; or
b) the means for removing temporary sections employs one technique selected from the group of manual means, shot blasting and thermal degradation to remove temporary sections; or
c) the means for removing temporary sections is adapted to dissolve or catalyse the temporary section away from the part.

## Patentansprüche

1. Verfahren zur Herstellung eines Teils aufweisend die Schritte:
a) Verwenden von Daten die erhalten werden von einem In-Scheiben-Schneide-Programm, um ein Herstellungsmittel zu steuern, welches Schichten (1) erzeugt, die Querschnittsscheiben eines benötigten Teils sind, aufweisend rechte Winkel und **gekennzeichnet durch** ein anderes Kantenmerkmal, wobei das Teil ein männliches oder weibliches Gegenstück zu einem Merkmal ist, dass von einer Basis (3, 4) bereitgestellt wird; und
b) Platzieren der Schichten in der Basis (3, 4) und Vibrieren derselben, so dass sie sich ausgerichtet auf das Merkmal der Basis setzen.

2. Verfahren gemäß Anspruch 1, wobei das Verfahren weiterhin ein nachfolgendes Verbinden jeder Schicht aufweist, wenn sie ausgerichtet ist, so dass ein Stapel von verbundenen Schichten graduell aufgebaut wird.

3. Verfahren gemäß Anspruch 1, weiterhin aufweisend ein paralleles Verbinden eines Stapels von ausgerichteten Schichten, so dass ein verbundener Stapel gebildet wird.

4. Verfahren gemäß Anspruch 2, weiterhin aufweisend ein Verbinden jeder Schicht, bevorzugt unter Verwendung einer Klemme (2), um die Schichten zusammenzudrücken, wenn sie auf der Basis ausgerichtet sind, wobei die Platte auch mit der Basis ausgerichtet ist.

5. Verfahren gemäß Anspruch 2, aufweisend das Entfernen von Blattmaterial von den Schichten, nachdem eine Schicht verbunden wurde.

6. Verfahren gemäß Anspruch 4, weiterhin aufweisend die Verwendung eines subtraktiven Schicht-Einstellvorgangs, um die Genauigkeit des Teils beizubehalten, wenn es aufgebaut wird.

7. Verfahren gemäß Anspruch 6, weiterhin aufweisend ein paralleles Durchführen der Einstellung für eine Mehrzahl von Schichten, welche auf entsprechenden Mehrzahlen von Platten aufgebaut werden, die in einer Basis gehalten werden.

8. Verfahren gemäß Anspruch 7, weiterhin aufweisend ein Vereinigen der Platten, bevor sie in der Basis angeordnet werden.

9. Verfahren gemäß Anspruch 8, weiterhin aufweisend ein Vereinigen der Schichten mit Blättern, bevor die Schichten an der Basis platziert werden, wobei die Blätter Kanäle aufweisen, um Energie in einen Stapel von Schichten einzuleiten, bevor die Schichten und die Blätter auf der Basis angeordnet und ausgerichtet werden.

10. Verfahren gemäß Anspruch 9, weiterhin aufweisend das Entfernen von temporären Abschnitten des Stapels bevorzugt durch Auflösen oder Wegkatalysieren derselben von dem Teil, so dass ein fertiges Teil von dem Stapel gelöst wird.

11. Anordnung zur Herstellung eines Teils aufweisend in Kombination:
a) ein In-Scheiben-Schneide-Programm-Mittel, das angeordnet ist, um ein Herstellungsmittel zu steuern, wobei das Herstellungsmittel Schichten (1) erzeugt, die Querschnittsscheiben des Teils sind, **dadurch gekennzeichnet, dass** das Teil Ausrichtungsmittel in Form eines Kantenmerkmals aufweist, welches das männliche oder weibliche Gegenstück zu einem Ausrichtungsmittel an einer Basis (3, 4) ist; und
b) Schichtmittel, zum Anordnen der Schichten (1) an der Basis, und
c) Vibrationsmittel (14) zum Vibrieren der Schichten, die an der Basis angeordnet sind, so dass sich die Schichten ausgerichtet auf dem Ausrichtungsmittel auf der Basis setzen.

12. Vorrichtung gemäß Anspruch 11, weiterhin aufweisend, dass die Schichtmittel angepasst sind, um nacheinander die Schichten an der Basis zu platzieren; und
Verbindungsmittel zum Verbinden der Schichten, das angeordnet ist, um jede Schicht zu verbinden, wenn sie ausgerichtet ist, so dass ein Stapel von verbundenen Schichten graduell aufgebaut wird.

13. Vorrichtung gemäß Anspruch 11, weiterhin aufweisend, dass das Verbindungsmittel angeordnet ist, einen Stapel von ausgerichteten Schichten zu verbinden, so dass die Schichten parallel verbunden werden.

14. Vorrichtung gemäß Anspruch 13, weiterhin aufweisend, dass die Verbindungsmittel bevorzugt Mittel zum Klemmen sind, um die Schichten zusammenzudrücken, die so angepasst sind, um die Schichten mit einem Plattenmittel zu verbinden, welches angepasst ist, um es mehreren Teilen zu erlauben, auf unterschiedlichen Platten aufgebaut zu werden und die Mittel zum Anordnen sind weiterhin angepasst, um die Platten an der Basis zu platzieren, wobei die Basis die Platten und die Schichten ausrichtet.

15. Vorrichtung gemäß Anspruch 11, weiterhin aufweisend Mittel zum Entfernen von temporärem Blattmaterial auf dem die Schichten hergestellt sind, nachdem eine Schicht verbunden wurde.

16. Vorrichtung gemäß Anspruch 15, weiterhin aufweisend Mittel zum Sicherstellen der Genauigkeit eines Teils, wenn es aufgebaut wird, wobei die Mittel zum Sicherstellen der Genauigkeit einen subtraktiven Vorgang verwenden.

17. Vorrichtung gemäß Anspruch 16, weiterhin aufweisend, dass die Einstellungsmittel bewirken, dass die Schichten eine ebene, parallele Beziehung für eine Mehrzahl von Schichten aufweisen, welche auf einer Anzahl von Platten aufgebaut werden, die an der Basis gehalten werden.

18. Vorrichtung gemäß Anspruch 17, wobei die Schichten und die Platten, die an der Basis platziert werden, durch ein Vereinigungsmittel vereinigt werden, bevor sie an der Basis angeordnet werden.

19. Vorrichtung gemäß Anspruch 18, weiterhin aufweisend, dass die Schichtmittel Einführungskanäle aufweisen, die Heizelemente, Heizleiter oder optische Fasern aufweisen, um Energie in einen Stapel von Schichten einzuleiten, um die Schichten zusammenzudrücken, so dass die Schichten miteinander verbunden werden können.

20. Vorrichtung gemäß Anspruch 21 weiterhin aufweisend:
a) ein Mittel zum Entfernen von temporären Bereichen des Stapels, so dass ein fertiges Teil von dem Stapel gelöst wird; oder
b) das Mittel zum Lösen von temporären Abschnitten eine Technik verwenden, die ausgewählt wird aus der Gruppe der manuellen Mittel, Sandstrahlen und thermischer Zersetzung, um temporäre Abschnitte zu entfernen; oder
c) das Mittel zum Entfernen von temporären Abschnitten angepasst ist, um temporäre Abschnitte von dem Teil Aufzulösen oder Wegzukatalysieren.

## Revendications

1. Procédé de fabrication d'une pièce, impliquant les étapes consistant :
a) à utiliser des données obtenues à partir d'un programme de tranchage pour commander un moyen de fabrication qui fabrique des couches (1), qui sont des tranches en section transversale d'une pièce requise ayant des angles droits, et **caractérisée par** une autre caractéristique de bord, la pièce étant une contrepartie mâle ou femelle d'une caractéristique constituée d'une base (3, 4), et
b) à mettre en place les couches dans la base (3, 4) et à les faire vibrer de façon qu'elles se déposent en registre sur la caractéristique de la base.

2. Procédé selon la revendication 1, dans lequel le procédé comprend en outre le collage successif de chaque couche, au fur et à mesure de sa mise en registre, de telle sorte qu'il se forme progressivement un empilement de couches collées.

3. Procédé selon la revendication 1, qui comprend en outre le collage d'un empilement de couches en registre en parallèle, de façon à former un empilement collé.

4. Procédé selon la revendication 2, qui comprend en outre le collage de chacune des couches, de préférence par utilisation d'un dispositif de serrage (2) pour forcer les couches les unes contre les autres au fur et à mesure de leur mise en registre sur la base, sur une plaque qui elle aussi est en registre avec la base.

5. Procédé selon la revendication 2, qui comprend l'enlèvement, à partir de la couche, du matériau en feuille après collage d'une couche.

6. Procédé selon la revendication 4, qui comprend en outre l'utilisation d'un procédé d'ajustement soustractif de couches pour maintenir la précision de la pièce au fur et à mesure de sa formation.

7. Procédé selon la revendication 6, qui comprend en outre la mise en oeuvre de l'ajustement en parallèle pour une pluralité de couches formées sur une pluralité correspondante de plaques qui sont maintenues dans une base.

8. Procédé selon la revendication 7, qui comprend en outre le collationnement des plaques avant leur mise en place dans la base.

9. Procédé selon la revendication 8, qui comprend en outre le collationnement, avant mise en place des couches sur la base, des couches avec des feuilles contenant des canaux destinés à guider l'énergie, en un empilement de couches avant que les couches et les feuilles ne soient placées dans la base et mises en registre.

10. Procédé selon la revendication 9, qui comprend en outre l'enlèvement, à partir de la pièce, des sections provisoires de l'empilement, de préférence par dissolution ou catalyse, de façon qu'une pièce finie soit détachée de l'empilement.

11. Appareillage pour la fabrication d'une pièce, comprenant en combinaison :
a) un moyen formant programme de tranchage disposé de façon à commander un moyen de fabrication, le moyen de fabrication fabriquant des couches (1) qui sont des tranches en coupe transversale de la pièce, **caractérisé en ce que** la pièce contient un moyen de mise en registre, sous forme d'une caractéristique de bord, qui est la contrepartie mâle ou femelle du moyen de mise en registre sur une base (3, 4), et
b) un moyen de fabrication de couches, pour mise en place des couches (1) sur la base, et
c) un moyen de vibration (14), pour faire vibrer la couche placée sur la base, de façon que les couches se déposent en registre sur le moyen de mise en registre sur la base.

12. Appareillage selon la revendication 11, dans lequel en outre le moyen de fabrication de couches est adapté à la mise en place successive des couches sur la base ; et comprend un moyen de collage, destiné à coller les couches disposées, de façon à coller chaque couche au fur et à mesure de sa mise en registre, de façon à former progressivement un empilement de couches collées.

13. Appareillage selon la revendication 11, dans lequel le moyen de collage est en outre disposé de façon à coller un empilement de couches en registre, de façon que les couches soient collées en parallèle.

14. Appareillage selon la revendication 13, dans lequel en outre le moyen de collage, de préférence un moyen de serrage pour forcer les couches les unes contre les autres, est adapté de façon à coller les couches à un moyen formant plaque, qui est adapté de façon à permettre la formation de plusieurs pièces sur des plaques différentes, le moyen de mise en place étant en outre adapté de façon à mettre en place les plaques sur la base, la base assurant la mise en registre des plaques et des couches.

15. Appareillage selon la revendication 11, qui comprend en outre un moyen pour enlever le matériau de feuille provisoire sur lequel les couches sont fabriquées, après collage d'une couche.

16. Appareillage selon la revendication 15, qui comprend en outre un moyen pour assurer la précision d'une pièce au fur et à mesure de sa formation, le moyen assurant la précision faisant appel à un procédé soustractif.

17. Appareillage selon la revendication 16, dans lequel en outre le moyen d'ajustement amène les couches à présenter une relation de parallélisme de niveau, pour une pluralité de couches formées sur un certain nombre de plaques qui sont maintenues sur la base.

18. Appareillage selon la revendication 17, dans lequel les couches et plaques placées sur la base sont collationnées par un moyen de collationnement avant d'être mises en place sur la base.

19. Appareillage selon la revendication 18, dans lequel le moyen de fabrication des couches comprend des canaux ayant des éléments chauffants, des conducteurs thermiques ou des fibres optiques, pour guider l'énergie dans un empilement de couches dans le but de forcer les couches les unes contre les autres, de telle sorte que les couches puissent être collées les unes aux autres.

20. Appareillage selon la revendication 21, qui comprend en outre :
a) un moyen pour enlever des sections provisoires de l'empilement, de façon qu'une pièce finie soit détachée de l'empilement ; ou bien
b) le moyen d'enlèvement de sections provisoires utilise une technique choisie dans l'ensemble comprenant les moyens manuels, le grenaillage ou la dégradation thermique, pour enlever les sections provisoires ; ou bien
c) le moyen d'enlèvement des sections provisoires est adapté de façon à enlever de la pièce la section provisoire, par dissolution ou catalyse.
